# EUROPEAN PATENT APPLICATION

(11) **EP 4 586 114 A1**
(43) Date of publication of application: **16.07.2025**
(21) Application number: 23883127.5
(22) Date of filing: 26.10.2023
(51) Int. Cl.: G06F 21/32, G06F 21/41, G06F 21/60, H04L 9/32

(54) **METHOD FOR CONNECTING DEVICES USING BIOMETRIC INFORMATION AND ELECTRONIC DEVICE THEREFOR**

(30) Priority: 26.10.2022 KR 20220139404; 15.11.2022 KR 20220152758
(71) Applicant: Samsung Electronics Co., Ltd., Suwon-si, Gyeonggi-do 16677 (KR)
(72) Inventor: KIM, Minho, Suwon-si, Gyeonggi-do 16677 (KR); CHANG, Moonsoo, Suwon-si, Gyeonggi-do 16677 (KR); CHOI, Inmyung, Suwon-si, Gyeonggi-do 16677 (KR)
(74) Representative: Gulde & Partner
(86) International application number: PCT/KR2023/016750
(87) International publication number: WO 2024/091022

(57) **Abstract**

One embodiment of the present invention comprises: at least one communication module (190); a memory (130) which stores biometric information of a user and a bio-hash corresponding to the biometric information; and a processor (120) operatively connected to at least one of the at least one communication module or the memory, wherein the processor may be configured to: receive, from an external device, a message containing at least one of a pass code pair and device information of the external device through the at least one communication module; authenticate a pass code associated with the external device using the bio-hash stored in the memory and the pass code pair; transmit device information of the electronic device to the external device on the basis of the authentication result; and connect to the external device on the basis of a request from the external device through the at least one communication module. Various other embodiments are possible.

## Description

### [Technical Field]

The disclosure relates to a method and device for connecting devices using biometric information.

### [Background Art]

With the development of digital technologies, various types of electronic devices have been widely utilized, such as, mobile communication terminals, personal digital assistants (PDA), electronic organizers, smartphones, tablet personal computers (PC), wearable devices, or the like. Such electronic devices may be limited in size in consideration of portability, and thus, their displays are also limited in size. Accordingly, various types of electronic devices that provides an enlarged screen based on a multi-display are being developed.

For example, an electronic device (e.g., smartphone) may connect to a wearable display device (e.g., AR glasses) and may provide expended reality (XR) content, such as a virtual reality (VR), an augmented reality (AR), and/or a mixed reality (MR). An electronic device may embody an AR environment such as a tethered AR scheme that provides a virtual content, generated by the electronic device, via a display of a wearable display device, and a stand-alone AR scheme in which a wearable display device that is not connected to the electronic device generates a virtual content alone and provides the content via its display.

### [Disclosure of Invention]

### [Technical Problem]

An electronic device may identify an identifier (or ID) of an external electronic device in order to connect to the external electronic device. When the identified ID of the electronic display device is selected, the electronic device may receive, from a user, an input of a pass code displayed in the external device. When the input pass code is verified, the electronic device connects to the external electronic device. After that, the user may need to identify and select the ID, and may need to input the pass code every time that the user connects the electronic device to the external electronic device.

An embodiment may disclose a method and device for simply pairing an electronic device and an external device (e.g., AR glasses, an IoT device, a smart TV) by using a bio-hash associated with biometric information of a user.

### [Solution to Problem]

An electronic device according to an embodiment of the disclosure may include at least one communication module 190, a memory 130 storing biometric information of a user and a bio-hash corresponding to the biometric information, and a processor 120 operatively connected to at least one of the at least one communication module or the memory, and the processor may be configured to receive, from an external device 200, a message including at least one of a pass code pair and device information of the external device via the at least one communication module, to authenticate a pass code associated with the external device by using the bio-hash stored in the memory and the pass code pair, to transmit, based on an authentication result, device information of the electronic device to the external device, and to connect, based on a request from the external device, to the external device via the at least one communication module.

An operation method of the electronic device 101 according to an embodiment of the disclosure may include an operation of receiving, from the external device 200, a message including at least one of a pass code pair and device information of the external device via the at least one communication module 190, an operation of authenticating a pass code associated with the external device by using a bio-hash stored in the memory 130 and the pass code pair, an operation of transmitting, based on an authentication result, device information of the electronic device to the external device, and an operation of connecting, based on a request from the external device, to the external device via the at least one communication module.

An operation method of an electronic device 200 according to an embodiment of the disclosure may include an operation of generating a bio-hash corresponding to biometric information of a user in response to a connection request, an operation of generating a pass code for connection to the electronic device, an operation of generating a message including a pass code that is encoded with the generated bio-hash, an operation of broadcasting the generated message, an operation of receiving device information of an external device 101 from the external device that responds to the broadcasted message, and an operation of pairing with the external device based on the device information of the external device.

### [Advantageous Effects of Invention]

According to an embodiment, inter-device authentication for paring may be simplified and security may be enhanced by using a bio-hash associated with biometric information of a user when performing paring of an electronic device and an external device.

According to an embodiment, security may be enhanced by receiving a message including a pass code encoded with a bio-hash and authenticating the pass code included in the received message by using a bio-hash stored in a memory.

According to an embodiment, usability may be improved by performing disconnection from an electronic device when it is determined that a user does not wear an external device, even though a request for disconnection is not separately provided from the user.

According to an embodiment, paring between an external device and an electronic device may be controlled based on a bio-hash so that a plurality of electronic devices may be connected to a single external device.

### [Brief Description of Drawings]

FIG. 1 is a block diagram illustrating an electronic device in a network environment according to an embodiment;
FIG. 2 is a diagram illustrating a connection relationship between an electronic device and an external device according to an embodiment;
FIG. 3 is a block diagram illustrating an external device according to an embodiment;
FIG. 4 is a flowchart illustrating a method of connecting an electronic device and an external device according to an embodiment;
FIG. 5 is a diagram illustrating an example of generating a bio-hash by an electronic device according to an embodiment of the disclosure;
FIG. 6 is a flowchart illustrating an operation method of an electronic device according to an embodiment;
FIG. 7 is a diagram illustrating a user interface for bio-hash registration in an electronic device according to an embodiment;
FIG. 8 is a flowchart illustrating a method of connecting to an electronic device using a bio-hash, by an external device according to an embodiment;
FIG. 9 is a diagram illustrating an example of a device connection request in an external device according to an embodiment of the disclosure;
FIG. 10 is a diagram illustrating an example of a message received from an external device according to an embodiment;
FIG. 11 is a diagram illustrating an example of connecting to different electronic devices, by an external device according to an embodiment;
FIG. 12 is a flowchart illustrating a method of connecting to different electronic devices, by an external device according to an embodiment;
FIG. 13 is a flowchart illustrating a method of cancelling a connection with one electronic device and connecting to another electronic device, by an external device according to an embodiment; and
FIG. 14 is a flowchart illustrating a method of indicating data transfer from one electronic device to another electronic device, by an external device according to an embodiment.

### [Mode for the Invention]

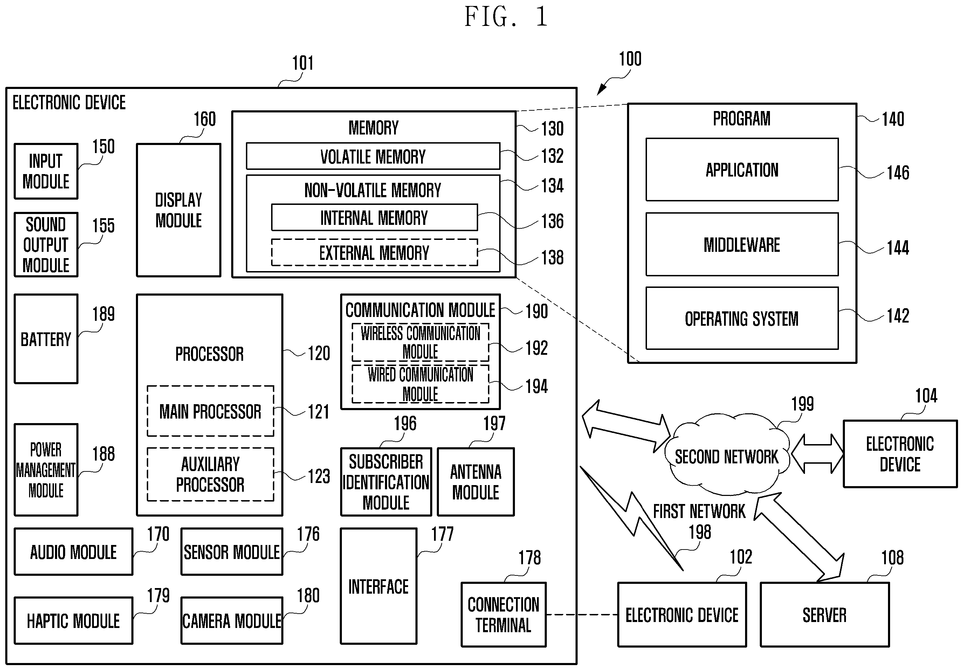

Fig. 1 is a block diagram illustrating an electronic device 101 in a network environment 100 according to certain embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. **In** some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semisupervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5th generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4th generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to certain embodiments, the antenna module 197 may form a mmWave antenna module. According to an embodiment, the mmWave antenna module may include a printed circuit board, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities mat be separately disposed in any other element. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

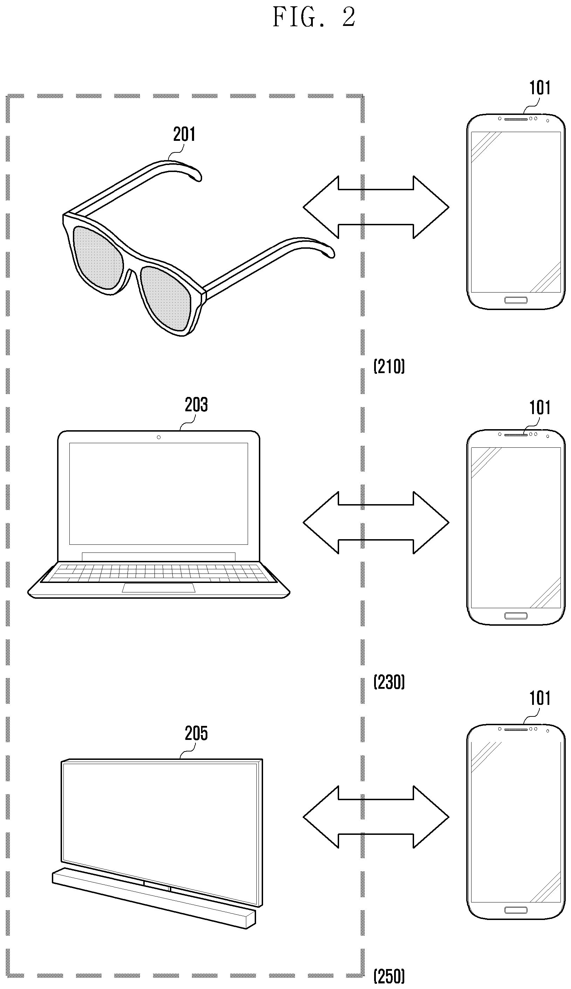

FIG. 2 is a diagram illustrating a connection relationship between an electronic device and an external device according to an embodiment.

Referring to FIG. 2, an electronic device (e.g., electronic device 101 of FIG. 1) according to an embodiment may simply connect to (e.g., pair with) an external device 200 by using a bio-hash. A bio-hash associated with a user may be stored in advance in a memory (e.g., memory 130 of FIG. 1) of the electronic device 101. The electronic device 101 may store biometric information of the user or a bio-hash corresponding to the biometric information of the user in a secure area (e.g., trusted execution environment (TEE)) of the memory 130. Here, the connection refers to the pairing of the electronic device 101 with the external device 200 via short-distance wireless communication (e.g., Bluetooth). The bio-hash may be generated using a feature (or a feature point) of the biometric information of the user. For example, although bio-hashes are generated from different devices, the bio-hashes may be generated as substantially the same value when the same biometric information is used. The electronic device 101 may compare a bio-hash stored in the memory 130 and a bio-hash received from the external device 200, and may authenticate a user without an external leakage of the biometric information of the user.

The external device 200 may include a first external device 201, a second external device 203, or a third external device 205. For example, the first external device 201 may be AR glasses or a head-mounted display (HMD). The second external device 203 may be a notebook computer or a tablet PC. The third external device 205 may be a TV. For example, the first external device 201 may have a first device feature, the second external device 203 may have a second device feature, and the third external device 205 may have a third device feature. A bio-hash may be determined based on a device feature that each external device has. Although descriptions in this specification regards the external device 200 as AR glasses, a notebook computer, or a TV, the embodiment is not limited thereto. The external device 200 may include various types of devices (e.g., IoT device) in addition to the examples illustrated in the drawing. Device feature information may include an external device type and/or external device's specification information.

For example, a first situation 210 may be an example in which the first external device 201 and the electronic device 101 are connected. The first external device 201 may determine whether a user wears the first external device 201 via various sensors such as a proximity sensor, strap adjustment, or the like. The first external device 201 may capture, with a camera, an iris of a user who wears the first external device 201, and may generate a bio-hash (or bio-hash value) of the user by using the captured iris image. The first external device 201 may generate a pass code for a communication connection to the first external device 201. The first external device 201 may encode the generated pass code with the generated bio-hash. The first external device 201 may generate a message including at least one of a tag, a pass code pair, or device information of the first external device 201.

The tag may indicate that the message is request data for obtaining (or receiving) device information. The pass code pair may include a one-time random value (e.g., an unencoded pass code) corresponding to a pass code, and a value (e.g., a pass code encoded with a bio-hash) obtained by encoding the pass code with a bio-hash. The device information of the first external device 201 may include at least one of a name (e.g., model name) of the first external device 201, device feature information, a network identifier, network information, or communication channel information. The device feature information refers to a device feature (e.g., first device feature) of the first external device 201, and may include a device type of the first external device 201 and/or specification information of the first external device 201. For example, the device feature information may include information indicating that the device type of the first external device 201 is AR glasses, and/or information indicating that a camera is contained in the first external device 201. The network identifier may be an identifier that identifies the first external device 201 in a network. The network information may be wireless communication information available in the first external device 201, and for example, may be information associated with Bluetooth, Wi-Fi, or UWB. The communication channel information may be channel information for smooth network communication, and for example, may be Bluetooth channel information or Wi-Fi channel information. The first external device 201 may broadcast the message using technology such as Bluetooth, ultra wide band (UWB), Wi-Fi Aware, or the like.

The electronic device 101, as the user's mobile device, may receive a broadcasted message, may encode a pass code included in the message by using a bio-hash stored in the memory 130, and may authenticate the pass code. The message may include both an unencoded pass code and an encoded pass code. The electronic device 101 may encode the pass code included in the message by using the bio-hash stored in the memory 130, may determine whether the encoded pass code is identical to the encoded pass code included in the message, and may authenticate the pass code. Alternatively, the electronic device 101 may decode the encoded pass code included in the message by using the bio-hash stored in the memory 130, may determine whether the decoded pass code is identical to the unencoded pass code included in the message, and may authenticate the pass code.

According to an embodiment, a plurality of bio-hashes corresponding to a plurality of pieces of biometric information may be stored in the memory 130 of the electronic device 101. For example, in the memory 130, a first bio-hash corresponding to a fingerprint that is first biometric information, a second bio-hash corresponding to an iris that is second biometric information, and a third bio-hash corresponding to a face that is third biometric information may be stored. Each biometric information is merely an example for describing the disclosure, and a type of biometric information is not limited thereto. The electronic device 101 may determine, based on the device information of the first external device 201, a bio-hash to be used for authenticating a pass code. For example, when the device feature information included in the device information of the first external device 201 includes a device feature of the first external device 201 indicating AR glasses or information indicating that a camera is included, the electronic device 101 may encode or decode a pass code by using the second bio-hash corresponding to an iris, so as to authenticate the pass code. When the device feature information does not include the device feature of the first external device 201, the electronic device 101 may sequentially use the plurality of bio-hashes stored in the memory 130, so as to authenticate the pass code. In the case in which the device feature information of the first external device 201 is included in the device information of the first external device 201, the electronic device 101 may authenticate the pass code by using a bio-hash corresponding to the device feature information of the first external device 201 from among the plurality of bio-hashes.

Upon authentication of the pass code, the electronic device 101 may determine that the user who wears the first external device 201 is identical to the user of the electronic device 101, and may transmit device information of the electronic device 101 to the first external device 201. Based on the device information of the first external device 201 included in the message, the electronic device 101 may transmit the device information of the electronic device 101 to the first external device 201. The device information of the first external device 201 includes network information or communication channel information and thus, the electronic device 101 may transmit the device information of the electronic device 101 to the first external device 201 by using the network information or communication channel information of the first external device 201. The device information of the electronic device 101 may include at least one of a name (e.g., model name) of the electronic device 101, device feature information, a network identifier, network information, or communication channel information. The device information of the electronic device 101 may include information associated with the electronic device 101 in the same or similar manner as the device information of the first external device 201.

The first external device 201 may receive the device information of the electronic device 101 from the electronic device 101, and may connect to (e.g., pair with) the electronic device 101 based on the device information of the electronic device 101. The first external device 201 may store the device information of the electronic device 101 in a communication connectable device list. According to an embodiment, when connected to the electronic device 101 for communication, the first external device 201 may delete the generated bio-hash or the generated pass code for security.

A second situation 230 may be an example in which the second external device 203 and the electronic device 101 are connected. The second external device 203 may detect (or identify) a user's request for screen interoperation (e.g., screen mirroring), data transfer, or the use of a clipboard. The second external device 203 may recognize biometric information of a user who provides the request for use in the second external device 203, and may generate a bio-hash of the user by using the recognized biometric information. The biometric information may be a facial image or a fingerprint image, but a biometric information type is not limited thereto. Hereinafter, a bio-hash generated in the first external device 201 is referred to as "first bio-hash" and a bio-hash generated in the second external device 203 is referred to as "second bio-hash." Herein, the first bio-hash and the second bio-hash may be identical to, or different from each other. Although bio-hashes are generated based on biometric information of the same user, if they are based on different body parts, the bio-hashes may be different. For example, when the first external device 201 generates a first bio-hash by using an iris image of a user, and the second external device 203 generates a second bio-hash by using a fingerprint image of the user, the first bio-hash may be different from the second bio-hash. Alternatively, when both the first external device 201 and the second external device 203 generate bio-hashes using the iris image of the user, the first bio-hash may be identical to the second bio-hash.

The second external device 203 may generate a pass code to enable the electronic device 101 to connect to the second external device 203, and may encode the pass code with the second bio-hash. The second external device 203 may broadcast a message including at least one of a tag, a pass code pair (e.g., a pass code (e.g., unencoded pass code) and a pass code encoded with the second bio-hash), or device information of the second external device 203. Hereinafter, a pass code generated in the first external device 201 is referred to as "first pass code" and a pass code generated in the second external device 203 is referred to as "second pass code." In addition, a message broadcasted from the first external device 201 may be referred to as "first message," and a message broadcasted from the second external device 203 may be referred to as "second message." The second external device 203 may broadcast the second message using technology such as Bluetooth, UWB, Wi-Fi Aware, or the like. The tag may indicate that the second message is request data for obtaining device information.

The device information of the second external device 203 may include at least one of a name (e.g., model name) of the second external device 203, device feature information, a network identifier, network information, or communication channel information. The device feature information refers to a device feature (e.g., second device feature) of the second external device 203, and may include a device type of the second external device 203 and/or specification information of the second external device 203. For example, the device feature information may include information indicating that the device type of the second external device 203 is a notebook computer, and/or information indicating that a camera or a fingerprint sensor is contained in the second external device 203. The network identifier may be an identifier that identifies the second external device 203 in a network. The network information may be wireless communication information available in the second external device 203, and for example, may be information associated with Bluetooth, Wi-Fi, or UWB. The communication channel information may be channel information for smooth network communication, and for example, may be Bluetooth channel information or Wi-Fi channel information. The device information of the second external device 203 may include information associated with the second external device 203 in the same or similar manner as the device information of the first external device 201.

The electronic device 101 may receive the broadcasted second message, may encode the second pass code included in the second message by using a bio-hash stored in the memory 130, and may authenticate the second pass code. The second message may include both the second pass code that is not encoded and an encoded second pass code. The electronic device 101 may encode the second pass code included in the second message by using the bio-hash stored in the memory 130, may determine whether the encoded second pass code is identical to the encoded second pass code included in the second message, and may authenticate the second pass code. Alternatively, the electronic device 101 may decode the encoded second pass code included in the second message by using the bio-hash stored in the memory 130, may determine whether the decoded second pass code is identical to the unencoded second pass code included in the second message, and may authenticate the second pass code.

According to an embodiment, in the memory 130 of the electronic device 101, a first bio-hash corresponding to a fingerprint that is first biometric information, a second bio-hash corresponding to an iris that is second biometric information, and a third bio-hash corresponding to a face that is third biometric information may be stored. The electronic device 101 may determine, based on the device information of the second external device 203, a bio-hash to be used for authenticating the second pass code. For example, when device feature information included in the device information of the second external device 203 includes a device feature of the second external device 203 indicating a notebook computer (e.g., second device feature) or information indicating that a camera or a fingerprint sensor is included, the electronic device 101 may encode or decode the second pass code by using the first bio-hash corresponding to a fingerprint, so as to authenticate the second pass code. When the device feature information does not include the device feature of the second external device 203, the electronic device 101 may sequentially use the plurality of bio-hashes stored in the memory 130, so as to authenticate the second pass code. In the case in which the device feature information of the second external device 203 is included in the device information of the second external device 203, the electronic device 101 may authenticate the second pass code by using a bio-hash corresponding to the device feature information of the second external device 203 from among the plurality of bio-hashes.

Upon authentication of the second pass code, the electronic device 101 may determine that the user who requests connection in the second external device 203 is identical to the user of the electronic device 101, and may transmit the device information of the electronic device 101 to the second external device 203. Based on the device information of the second external device 203 included in the second message, the electronic device 101 may transmit the device information of the electronic device 101 to the second external device 203. The device information of the second external device 203 includes network information or communication channel information and thus, the electronic device 101 may transmit the device information of the electronic device 101 to the second external device 203 by using the network information or communication channel information of the second external device 203.

The second external device 203 may receive the device information of the electronic device 101 from the electronic device 101, and may connect to (e.g., pair with) the electronic device 101 based on the device information of the electronic device 101. The second external device 203 may store the device information of the electronic device 101 in a communication connectable device list. According to an embodiment, when connected to the electronic device 101 for communication, the second external device 203 may delete the generated second bio-hash or the generated second pass code.

A third situation 250 may be an example in which the third external device 205 and the electronic device 101 are connected. The third external device 205 may detect (or identify) a user's request for screen interoperation (e.g., screen mirroring), data transfer, or the use of a clipboard. The third external device 205 may recognize biometric information of the user who provides the request for use in the third external device 205, and may generate a bio-hash of the user by using the recognized biometric information. The biometric information may be a facial image. Hereinafter, a bio-hash generated in the third external device 205 may be referred to as "third bio-hash." Herein, the third bio-hash may be identical to, or different from, the first bio-hash or the second bio-hash. For example, when the first external device 201 generates a first bio-hash by using an iris image of the user, and the third external device 205 generates a third bio-hash by using a facial image of the user, the first bio-hash may be different from the third bio-hash. Alternatively, when both the first external device 201 to the third external device 205 generate bio-hashes using the facial image of the user, the first bio-hash to the third bio-hash may be identical to each other.

The third external device 205 may generate a pass code to enable the electronic device 101 to connect to the third external device 205, and may encode the pass code with the third bio-hash. The third external device 205 may broadcast a message including at least one of a pass code (e.g., an unencoded pass code), a pass code encoded with the second bio-hash, or device information of the second external device 203. Hereinafter, a pass code generated in the third external device 205 may be referred to as "third pass code." In addition, a message broadcasted by the third external device 205 may be referred to as "third message." The third external device 205 may broadcast the third message using technology such as Bluetooth, UWB, Wi-Fi Aware, or the like. In the third message, a tag indicating that the third message is request data for obtaining device information may be included.

The device information of the third external device 205 may include at least one of a name (e.g., model name) of the third external device 205, device feature information, a network identifier, network information, or communication channel information. The device feature information refers to a device feature (e.g., third device feature) of the third external device 205, and may include a device type of the third external device 205 and/or specification information of the third external device 205. For example, the device feature information may include information indicating that the device type of the third external device 205 is a TV, and/or information indicating that a camera is contained in the third external device 205. The network identifier may be an identifier that identifies the third external device 205 in a network. The network information may be wireless communication information available in the third external device 205, and for example, may be information associated with Bluetooth, Wi-Fi, or UWB. The communication channel information may be channel information for smooth network communication, and for example, may be Bluetooth channel information or Wi-Fi channel information. The device information of the third external device 205 may include information associated with the third external device 205 in the same or similar manner as the device information of the first external device 201.

The electronic device 101 may receive the broadcasted third message, may encode the third pass code included in the third message by using a bio-hash stored in the memory 130, and may authenticate the third pass code. The third message may include both the third pass code that is not encoded and an encoded third pass code. The electronic device 101 may encode the third pass code included in the third message by using the bio-hash stored in the memory 130, may determine whether the encoded third pass code is identical to the encoded third pass code included in the third message, and may authenticate the third pass code. Alternatively, the electronic device 101 may decode the encoded third pass code included in the third message by using the bio-hash stored in the memory 130, may determine whether the decoded third pass code is identical to the unencoded third pass code included in the third message, and may authenticate the third pass code.

According to an embodiment, in the memory 130 of the electronic device 101, a first bio-hash corresponding to a fingerprint that is first biometric information, a second bio-hash corresponding to an iris that is second biometric information, and a third bio-hash corresponding to a face that is third biometric information may be stored. The electronic device 101 may determine, based on the device information of the third external device 205, a bio-hash to be used for authenticating the third pass code. For example, when device feature information included in the device information of the third external device 205 includes a device feature of the third external device 205 indicating a TV or information indicating that a camera is included, the electronic device 101 may encode or decode the third pass code by using the third bio-hash corresponding to a face, so as to authenticate the third pass code. When the device feature information does not include the device feature of the third external device 205, the electronic device 101 may sequentially use the plurality of bio-hashes stored in the memory 130, so as to authenticate the third pass code. In the case in which the device feature information of the third external device 205 is included in the device information of the third external device 205, the electronic device 101 may authenticate the third pass code by using a bio-hash corresponding to the device feature information of the third external device 205 from among the plurality of bio-hashes.

Upon authentication of the third pass code, the electronic device 101 may determine that the user who requests connection in the third external device 205 is identical to the user of the electronic device 101, and may transmit the device information of the electronic device 101 to the third external device 205. Based on the device information of the third external device 205 included in the third message, the electronic device 101 may transmit the device information of the electronic device 101 to the third external device 205. The device information of the third external device 205 includes network information or communication channel information and thus, the electronic device 101 may transmit the device information of the electronic device 101 to the third external device 205 by using the network information or communication channel information of the third external device 205.

The third external device 205 may receive the device information of the electronic device 101 from the electronic device 101, and may connect to (e.g., pair with) the electronic device 101 based on the device information of the electronic device 101. The third external device 205 may store the device information of the electronic device 101 in a communication connectable device list. According to an embodiment, when connected to the electronic device 101 for communication, the third external device 205 may delete the generated third bio-hash or the generated third pass code.

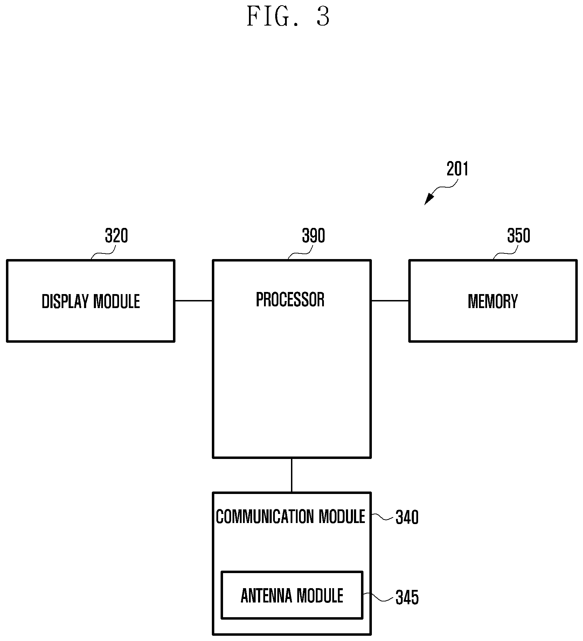

FIG. 3 is a block diagram illustrating an external device according to an embodiment.

Referring to FIG. 3, an external device (e.g., external device 200 of FIG. 2) according to an embodiment may include a display module 320, a communication module 340, a memory 350, and a processor 390. Some of the components included in the external device 200 may be omitted or a new component may be further included. For example, when the external device 200 is AR glasses (e.g., first external device 201 of FIG. 2), a component such as glasses, a sensor module, or a camera module may be further included. When the external device 200 is a notebook computer (e.g., second external device 203 of FIG. 2), a component such as a camera module or the like may be further included. According to an embodiment, a component included in the external device 201 may be understood as, for example, a hardware module (e.g., circuitry).

According to an embodiment, the display module 320 may visually provide information to the outside (e.g., user) of the external device 200. The display module 320 may include, for example, a display, a hologram device, or a projector, and a control circuit for controlling the corresponding device. The communication module 340 may correspond to the wireless communication module 192 as illustrated in FIG. 1. According to an embodiment, the external device 200 may perform wireless communication with an external device (e.g., server 201 of FIG. 1 and/or other electronic devices 101, 102, and 104) via a network by using the communication module 340. For example, the external device 200 may perform wireless communication with the electronic device 101, and may exchange instructions and/or data with each other.

According to an embodiment, the communication module 340 may include an antenna module 345. For example, the communication module 340 may support various technologies (e.g., beamforming, MIMO, and/or array antenna) to secure performance in a designated frequency band. According to an embodiment, the antenna module 345 may transmit signals or power to the outside (e.g., a device and/or server around the external device 200), or may receive signals or power from the outside. According to an embodiment, the antenna module 345 may include a plurality of antennas (e.g., array antenna). According to an embodiment, signals or power reception or transmission may be performed between the communication module 340 and the outside via the antenna module 345.

The memory 350 may correspond to the memory 130 as described with reference to FIG. 1. According to an embodiment, the memory 350 may store various data used by the external device 200. Data may include, for example, input data or output data associated with software (e.g., program 140 of FIG. 1) and a command related thereto. The memory 350 may store instructions that causes the processor 390 to operate. The instructions may be stored in the memory 350 as software, and may be executed by the processor 390.

The processor 390 may execute a program (e.g., program 140 of FIG. 1) stored in the memory 350, may control at least one other component (e.g., hardware or software component), and may execute various data processing or operations. The processor 390 may generate a bio-hash and a pass code when connection to the electronic device (e.g., electronic device 101 of FIG. 1) is requested. The processor 390 may generate a message including a pass code that is encoded with a generated bio-hash. The processor 390 may generate a message including at least one of a tag, a pass code pair, or device information of the external device 200. The tag may indicate that the message is request data for obtaining device information. The pass code pair may include an unencoded pass code and a pass code encoded with a bio-hash. The device information of the external device 200 may include at least one of a name (e.g., model name) of the external device 200, device feature information, a network identifier, network information, or communication channel information.

The processor 390 may broadcast the generated message via the communication module 340, and may receive device information of the electronic device 101 from the electronic device 101 that receives the broadcasted message. The processor 390 may identify the device information of the electronic device 101, and may store the device information of the electronic device 101 in a communication connectable device list. The processor 390 may connect to (e.g., pair with) the electronic device 101 based on the device information of the electronic device 101.

An electronic device according to an embodiment of the disclosure may include the at least one communication module 190, the memory 130 storing biometric information of a user and a bio-hash corresponding to the biometric information, and the processor 120 operatively connected to at least one of the at least one communication module or the memory, and the processor may be configured to receive, from the external device 200, a message including at least one of a pass code pair and device information of the external device via the at least one communication module, to authenticate a pass code associated with the external device by using the bio-hash stored in the memory and the pass code pair, to transmit, based on an authentication result, device information of the electronic device to the external device, and to connect, based on a request from the external device, to the external device via the at least one communication module.

The pass code pair may include a first pass code obtained by encoding the pass code with the bio-hash, and a second pass code corresponding to the pass code.

The processor may be configured to decode a first pass code included in the pass code pair by using the bio-hash stored in the memory, to determine whether the decoded pass code is identical to a second pass code included in the pass code pair, and to authenticate the pass code associated with the external device.

The processor may be configured to encode a second pass code included in the pass code pair by using the bio-hash stored in the memory, and to determine whether the encoded pass code is identical to a first pass code included in the pass code pair, so as to authenticate the pass code associated with the external device.

The processor may be configured to determine, based on the device information of the external device, a bio-hash to be used for authenticating the pass code from among a plurality of bio-hashes.

The processor may be configured to identify device feature information of the external device included in the device information of the external device, to authenticate the pass code by using a first bio-hash associated with a first device feature from among the plurality of bio-hashes when the identified device feature information corresponds to the first device feature, and to authenticate the pass code by using a second bio-hash associated with a second device feature from among the plurality of bio-hashes when the identified device feature information corresponds to the second device feature, and the first bio-hash and the second bio-hash may be stored in the memory and may be different from each other.

The processor may be configured, upon authentication of the pass code, to determine that a user who uses the external device is identical to a user of the electronic device and to transmit the device information of the electronic device to the external device.

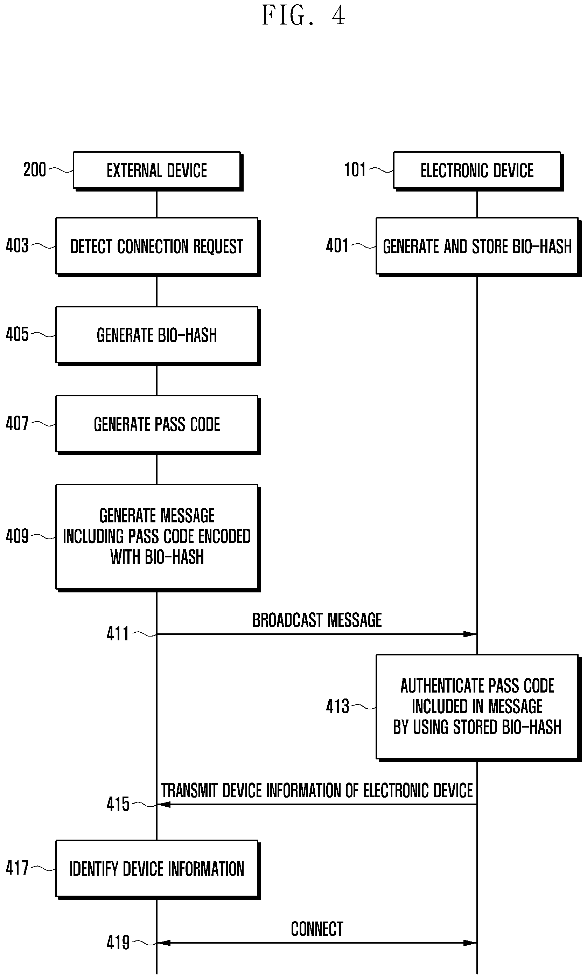

FIG. 4 is a flowchart illustrating a method of connecting an electronic device and an external device according to an embodiment.

Referring to FIG. 4, in operation 401, an electronic device (e.g., electronic device 101 of FIG. 1, processor 120) according to an embodiment may generate and store a bio-hash. The bio-hash (or bio-hash value) may be generated using a feature (or feature point) of biometric information of a user. Although bio-hashes are generated from different devices, the bio-hashes are generated as substantially the same value when the same biometric information is used. A plurality of bio-hashes corresponding to a plurality of pieces of biometric information may be stored in a memory of the electronic device 101 (e.g., memory 130 of FIG. 1). For example, in the memory 130, a first bio-hash corresponding to a fingerprint that is first biometric information, a second bio-hash corresponding to an iris that is second biometric information, and a third bio-hash corresponding to a face that is third biometric information may be stored. According to an embodiment, the first bio-hash may include bio-hash 1-1 corresponding to a first fingerprint (e.g., thumb) or bio-hash 1-2 corresponding to a second fingerprint (e.g., index finger).

The electronic device 101 may recognize a fingerprint of the user via a fingerprint sensor (e.g., sensor module 176 of FIG. 1), may extract a feature point from a recognized fingerprint image, and may generate the first bio-hash corresponding to the fingerprint by using the extracted feature point. The electronic device 101 may capture an iris of the user via a camera module (e.g., camera module 180 of FIG. 1), may extract a feature point from the captured iris image, and may generate the second bio-hash corresponding to the iris by using the extracted feature point. Alternatively, the electronic device 101 may capture the face of the user by using the camera module 180, extract a feature point from the captured facial image, and may generate the third bio-hash corresponding to the face by using the extracted feature point.

In operation 403, an external device (e.g., external device 200 of FIG. 2) may detect a connection request. The external device 200 may include AR glasses (e.g., first external device 201 of FIG. 2), a notebook computer (e.g., second external device 203 of FIG. 2), or a TV (e.g., third external device 205 of FIG. 2). The connection request may request connection to another device, and may include, for example, the case of detecting that a user wears the external device 200 or receiving a request for screen interoperation, data transfer, or the use of a clipboard. The connection request may be different for each device feature of the external device.

In operation 405, the external device 200 may generate a bio-hash. For example, the external device 200 (e.g., first external device 201) may capture an iris of a user by using a camera (e.g., camera module 370 of FIG. 3), and may generate the bio-hash by using the captured iris image. The external device 200 may extract a feature point from the iris image, and may generate the bio-hash corresponding to the iris by using the extracted feature point. Alternatively, the external device 200 (e.g., second external device 203) may recognize a fingerprint of the user via a fingerprint sensor, and may generate the bio-hash by using a recognized fingerprint image. The external device 200 may extract a feature point from the fingerprint image, and may generate the bio-hash corresponding to the fingerprint by using the extracted feature point. Alternatively, the external device 200 (e.g., third external device 205) may capture the face of the user via the camera, and may generate the bio-hash by using the captured facial image. The external device 200 may extract a feature point from the facial image, and may generate the bio-hash corresponding to the face by using the extracted feature point.

According to an embodiment, the external device 200 may generate at least one bio-hash based on the device feature of the external device 200. For example, when the external device 200 is AR glasses, it generates a bio-hash corresponding to an iris. When the external device 200 is a notebook computer, it generates a bio-hash corresponding to a fingerprint. When the external device 200 is a TV, it generates a bio-hash corresponding to a face. This is merely an embodiment, but the disclosure is not limited thereto.

In operation 407, the external device 200 may generate a pass code. The pass code may be a one-time random value generated for connection to the external device 200. The first external device 200 may encode the generated pass code with the generated bio-hash.

**In** operation 409, the external device 200 may generate a message including the pass code encoded with the bio-hash. For example, the external device 200 may generate a message including at least one of a tag, a pass code pair, or device information of the external device 200. The tag may indicate that the message is request data for obtaining device information. The pass code pair may include an unencoded pass code and a pass code encoded with a bio-hash. The device information of the external device 200 may include at least one of a name (e.g., model name) of the external device 200, device feature information, a network identifier, network information, or communication channel information. The device feature information indicates a device feature of the external device 200, and may include, for example, information indicating that a device type of the external device 200 is AR glasses, a notebook computer, or a TV, and/or information indicating that a camera or a fingerprint sensor is included in the external device 200. The network identifier may be an identifier that identifies the external device 200 in a network. The network information may be wireless communication information available in the external device 200, and for example, may be information associated with Bluetooth, Wi-Fi, or UWB. The communication channel information may be channel information for smooth network communication, and for example, may be Bluetooth channel information or Wi-Fi channel information.

In operation 411, the external device 201 may broadcast the message. The external device 201 may broadcast the message using a communication technology such as Bluetooth, UWB, Wi-Fi Aware, or the like.

In operation 413, the electronic device 101 may authenticate the pass code included in the message by using a stored bio-hash. The electronic device 101 may receive the message broadcasted from the external device 201 using a communication technology such as Bluetooth, UWB, Wi-Fi Aware, or the like. The electronic device 101 may identify (or extract) the pass code pair included in the message. The electronic device 101 may encode the pass code included in the extracted pass code pair by using a stored bio-hash, and may determine whether the encoded pass code is identical to the encoded pass code included in the pass code pair. Alternatively, the electronic device 101 may decode the encoded pass code included in the extracted pass code pair by using a stored bio-hash, and may determine whether the decoded pass code is identical to the pass code included in the pass code pair. When the pass code is identical, the electronic device 101 may determine that the user who wears (or uses) the external device 200 is identical to the user of the electronic device 101.

According to an embodiment, the electronic device 101 may determine, based on the device information of the external device 200, a bio-hash to be used for authenticating the pass code. For example, when the device feature information included in the device information of the external device 200 includes information indicating that a device type of the external device 200 is AR glasses and/or information indicating that a camera is included in the external device 200, the electronic device 101 may encode or decode the pass code by using the second bio-hash corresponding to an iris, so as to authenticate the pass code. Alternatively, when the device information of the external device 200 does not include the device feature information of the external device 200, the electronic device 101 may sequentially use the plurality of bio-hashes stored in the memory 130, so as to authenticate the pass code. When the device feature information includes the device feature information of the external device 200, the electronic device 101 may authenticate the pass code by using a bio-hash corresponding to the device feature information of the external device 200 from among the plurality of bio-hashes.

**In** operation 415, the electronic device 101 may transmit the device information of the electronic device 101 to the external device 200. Based on the device information of the external device 200 included in the message, the electronic device 101 may transmit the device information of the electronic device 101 to the external device 200. The device information of the external device 200 includes network information or communication channel information and thus, the electronic device 101 may transmit the device information of the electronic device 101 to the external device 200 by using the network information or communication channel information of the external device 200. The device information of the electronic device 101 may include at least one of a name (e.g., model name) of the electronic device 101, device feature information, a network identifier, network information, or communication channel information. The device information of the electronic device 101 may include information associated with the electronic device 101 in the same or similar manner as the device information of the external device 200.

**In** operation 417, the external device 200 may identify the device information of the electronic device 101. The external device 200 may receive the device information of the electronic device 101 from the electronic device 101, and may store the device information of the electronic device 101 in a communication connectable device list.

In operation 419, the external device 200 may connect to (e.g., pair with) the electronic device 101 based on the device information of the electronic device 101. For example, when the electronic device 101 is capable of performing UWB communication, the external device 200 may establish a UWB communication connection or may connect to the electronic device 101 for communication via Bluetooth or Wi-Fi. According to an embodiment, when connected to the electronic device 101 for communication, the first external device 201 may delete the generated bio-hash or the generated pass code for security.

According to an embodiment, the external device 200 may provide the communication connectable device list in response to a request from the user, in the state of being connected to the electronic device 101. The external device 200 may select, based on a user input, any one device from the communication connectable device list. When any one device is selected from the communication connectable device list, the external device 200 may switch a device connected for communication, from the electronic device 101 to the selected device. For example, the external device 200 may disconnect from the electronic device 101, and may perform a process for connecting the selected device and may connect to the selected device.

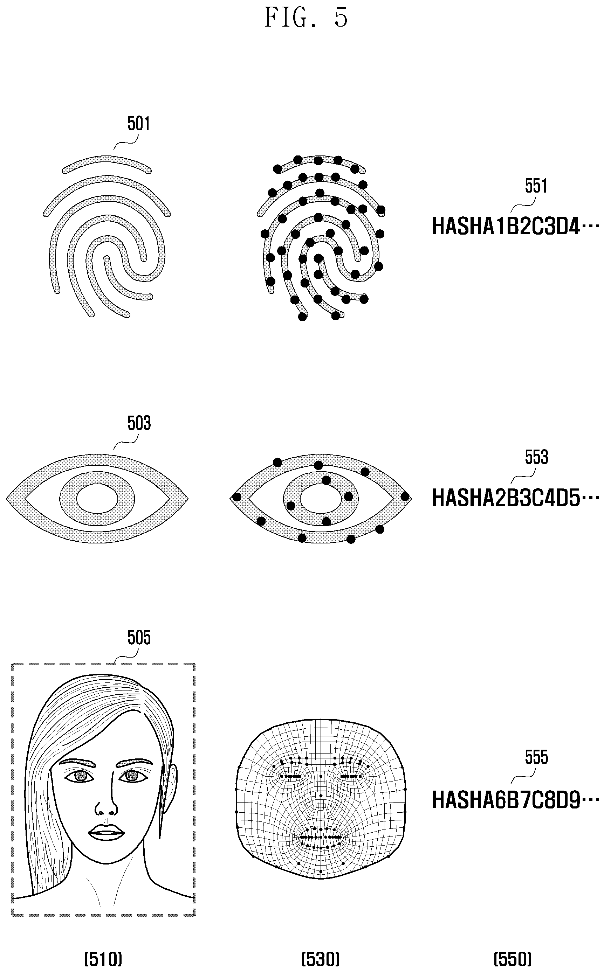

FIG. 5 is a diagram illustrating an example of generating a bio-hash by an electronic device according to an embodiment of the disclosure.

Referring to FIG. 5, an electronic device (e.g., electronic device 101 of FIG. 1) according to an embodiment may obtain biometric information 510 of a user, may extract a feature point 530 from the obtained biometric information 510, and may generate a bio-hash 550 based on the extracted feature point 530. For example, the biometric information 510 may include at least one of a fingerprint image 501, an iris image 503, or a facial image 505. For example, the electronic device 101 may extract a feature point from the fingerprint image 501 obtained by a fingerprint sensor (e.g., sensor module 176 of FIG. 1), and may generate a first bio-hash 551 corresponding to a fingerprint by using the extracted feature point. The electronic device 101 may extract a feature point from the iris image 503 obtained by a camera module (e.g., camera module 180 of FIG. 1), and may generate a second bio-hash 553 corresponding to an iris by using the extracted feature point. Alternatively, the electronic device 101 may extract a feature point from the facial image 505 obtained using the camera module 180, and may generate a third bio-hash 555 corresponding to a face by using the extracted feature point.

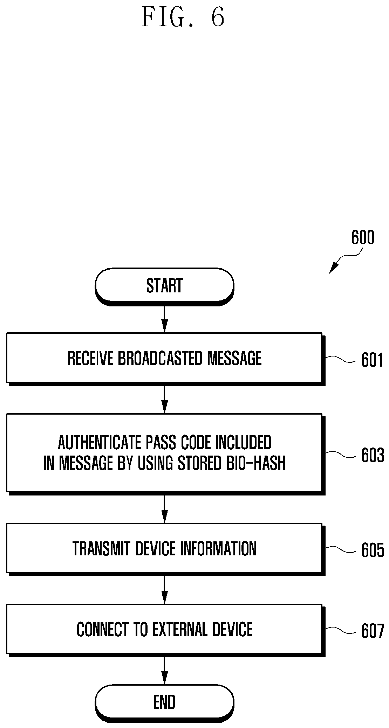

FIG. 6 is a flowchart 600 illustrating an operation method of an electronic device according to an embodiment.

Referring to FIG. 6, in operation 601, a processor (e.g., processor 120 of FIG. 1) of an electronic device (e.g., electronic device 101 of FIG. 1) according to an embodiment may receive a message broadcasted via a communication module (e.g., communication module 190 of FIG. 1). The message may be transmitted from an external device (e.g., external device 200 of FIG. 2) to a plurality of unspecified devices located in the surrounding area. The message may include at least one of a tag, a pass code pair, or device information of the external device 200. The tag may indicate that the message is request data for obtaining device information. The pass code pair may include a one-time random value (e.g., an unencoded pass code) corresponding to a pass code of the external device 200, and a value (e.g., a pass code encoded with a bio-hash) obtained by encoding the pass code with a bio-hash. The device information of the external device 200 may include at least one of a name (e.g., model name) of the external device 200, device feature information, a network identifier, network information, or communication channel information.

According to an embodiment, a bio-hash associated with a user may be stored in advance in a memory (e.g., memory 130 of FIG. 1) of the electronic device 101. The electronic device 101 may store biometric information of the user or the bio-hash corresponding to the biometric information of the user in a secure area of the memory 130. For example, in the memory 130, a first bio-hash corresponding to a fingerprint that is first biometric information, a second bio-hash corresponding to an iris that is second biometric information, and a third bio-hash corresponding to a face that is third biometric information may be stored.

In operation 603, the processor 120 may authenticate the pass code included in the message by using a stored bio-hash. The processor 120 may encode the pass code included in the message by using the bio-hash stored in the memory 130, may determine whether the encoded pass code is identical to the encoded pass code included in the message, and may authenticate the pass code. Alternatively, the processor 120 may decode the encoded pass code included in the message by using the bio-hash stored in the memory 130, may determine whether the decoded pass code is identical to the unencoded pass code included in the message, and may authenticate the pass code.

According to an embodiment, the processor 120 may determine, based on the device information of the external device 200, a bio-hash to be used for authenticating the pass code. For example, when the device feature information included in the device information of the external device 200 includes information indicating that a device type of the external device 200 is AR glasses and/or information indicating that a camera is included in the external device 200, the processor 120 may encode or decode the pass code by using the second bio-hash corresponding to an iris, so as to authenticate the pass code. When the device feature information does not include the device feature information of the external device 200, the processor 120 may sequentially use a plurality of bio-hashes stored in the memory 130, so as to authenticate the pass code. When the device feature information includes the device feature information of the external device 200, the processor 120 may authenticate the pass code by using a bio-hash corresponding to the device feature information of the external device 200 from among the plurality of bio-hashes.

In operation 605, the processor 120 may transmit device information of the electronic device 101. Upon authentication of the pass code, the processor 120 may determine that a user who wears (or uses) the external device 200 is identical to the user of the electronic device 101, and may transmit the device information of the electronic device 101 to the external device 200. Based on the device information of the external device 200 included in the message, the processor 120 may transmit the device information of the electronic device 101 to the external device 200. The device information of the external device 200 includes network information or communication channel information and thus, the processor 120 may transmit the device information of the electronic device 101 to the external device 200 by using the network information or communication channel information of the external device 200. The device information of the electronic device 101 may include at least one of a name (e.g., model name) of the electronic device 101, device feature information, a network identifier, network information, or communication channel information. The device information of the electronic device 101 may include information associated with the electronic device 101 in the same or similar manner as the device information of the external device 200.

In operation 607, the processor 120 may connect to the external device 200. The external device 200 that receives the device information of the electronic device 101 may request connection from the electronic device 101 based on the device information of the electronic device 101. The processor 120 may connect to the external device 200 for communication in response to the connection request from the external device 200. For example, the processor 120 may connect to the external device 200 for communication via the communication module 190. Upon connection for communication, the processor 120 may transmit data (or file) (e.g., at least one of text, an image, a video, and a document) to the external device 200, or may receive data from the external device 200. Upon reception of a data transfer command from the external device 200, the processor 120 may connect to another electronic device (e.g., electronic device 102 of FIG. 1) according to the data transfer command, and may transfer data stored in the memory 130 to the other electronic device.

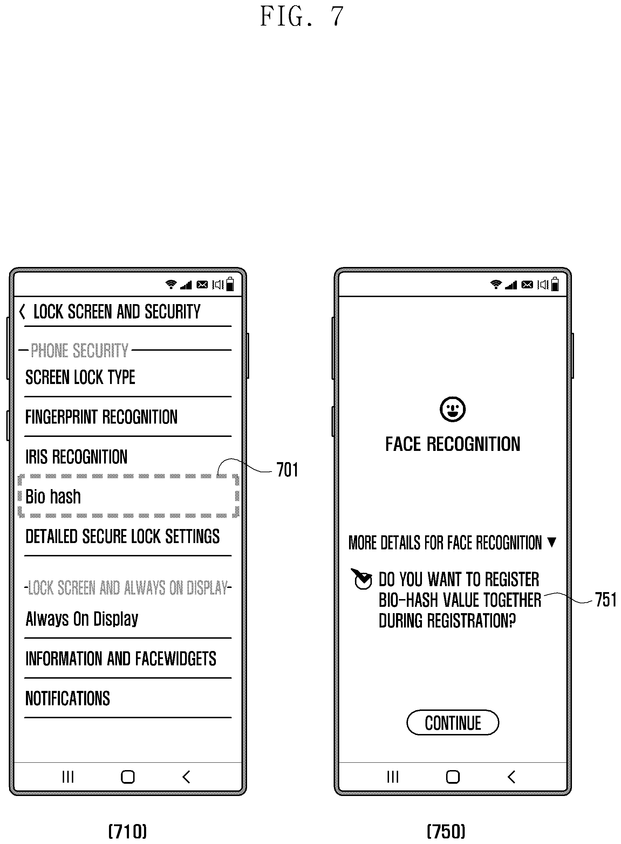

FIG. 7 is a diagram illustrating a user interface for bio-hash registration in an electronic device according to an embodiment.

Referring to FIG. 7, an electronic device (e.g., electronic device 101 of FIG. 1) according to an embodiment may display a first user interface 710 related to a lock screen and security on a display (e.g., display module 160 of FIG. 1). The first user interface 710 may include various menus (or items) such as a screen lock type, fingerprint recognition, iris recognition, a bio-hash, detailed secure lock settings, or the like. When a user selects a bio-hash registration item 701 in the first user interface 710, the electronic device 101 may provide a second user interface 750 for bio-hash registration. The second user interface 750 may include a checkbox 751 to check whether to register a bio-hash corresponding to a face together when facial recognition is performed. When the check box 751 is ticked, the electronic device 101 may capture the face of the user via a camera (e.g., camera module 180 of FIG. 1), and may generate a bio-hash corresponding to the face based on the captured facial image. The obtained facial image (feature information extracted from the facial image) or the generated bio-hash may be stored in a secure area of a memory (e.g. memory 130 of FIG. 1). When the checkbox 751 is unticked, the electronic device 101 may capture the face of the user and may store the captured facial image in the secure area of the memory 130. Although FIG. 7 illustrates an example of facial recognition, this may be equivalently applied to biometric information such as an iris, a fingerprint, or the like.

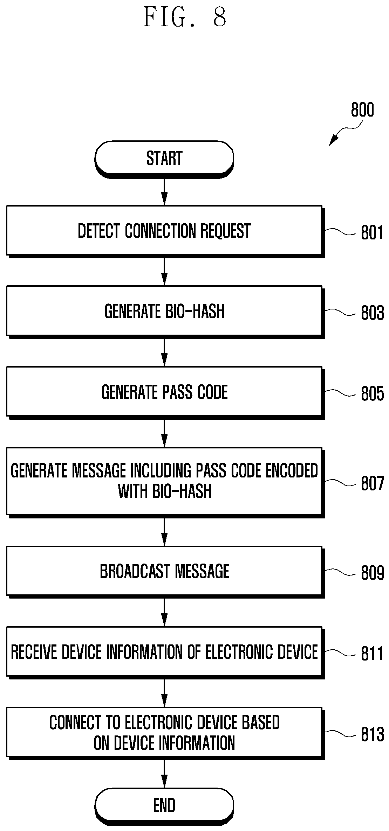

FIG. 8 is a flowchart illustrating a method of connecting to an electronic device using a bio-hash, by an external device according to an embodiment.

Referring to FIG. 8, in operation 801, a processor (e.g., processor 390 of FIG. 3) of an external device (e.g., external device 200 of FIG. 2) according to an embodiment may detect a connection request. Regarding the connection request, when a proximity sensor (e.g., proximity sensor 331 of FIG. 3) detects that the external device 200 is worn (e.g., in the case in which the external device 200 is AR glasses), the processor 120 may determine that a connection request is detected. Alternatively, when a request for screen interoperation, data transfer, or the use of a clipboard is received (e.g., in the case in which the external device 200 is a notebook computer or a TV) from a user, the processor 120 may determine that the connection request is detected. The connection request may be different for each external device 200.

In operation 803, the processor 390 may generate a bio-hash. Upon detection of the connection request, the processor 390 may obtain biometric information of the user, and may generate a bio-hash based on the obtained biometric information. For example, when the external device 200 is AR glasses, the processor 390 may obtain an iris image as biometric information of the user, may extract a feature point from the obtained iris image, and may generate, based on the extracted feature point, a bio-hash corresponding to an iris. When the external device 200 is a notebook computer or a tablet PC, the processor 390 may obtain a fingerprint image as biometric information of the user, may extract a feature point from the obtained fingerprint image, and may generate, based on the extracted feature point, a bio-hash corresponding to a fingerprint. When the external device 200 is a notebook computer, a tablet PC, or a TV, the processor 390 may obtain a facial image as biometric information of the user, may extract a feature point from the obtained facial image, and may generate, based on the extracted feature point, a bio-hash corresponding to a face.

In operation 805, the processor 390 may generate a pass code. The pass code may be a one-time random value required for connection to the external device 200. The processor 390 may encode the generated pass code with the generated bio-hash.

In operation 807, the processor 390 may generate a message including the pass code encoded with the bio-hash. The processor 390 may generate a message including at least one of a tag, a pass code pair, or device information of the external device 200. The tag may indicate that the message is request data for obtaining device information. The pass code pair may include a one-time random value (e.g., an unencoded pass code) corresponding to the pass code, and a value (e.g., a pass code encoded with a bio-hash) obtained by encoding the pass code with the bio-hash. The device information of the external device 200 may include at least one of a name (e.g., model name) of the external device 200, device feature information, a network identifier, network information, or communication channel information. The network identifier may be an identifier that identifies the external device 200 in a network. The network information may be wireless communication information available in the external device 200, and for example, may be information associated with Bluetooth, Wi-Fi, or UWB. The communication channel information may be channel information for smooth network communication, and for example, may be Bluetooth channel information or Wi-Fi channel information.

In operation 809, the processor 390 may broadcast the message. The message may be transmitted to a plurality of unspecified devices located around the external device 200. The processor 390 may broadcast the message by using a communication technology such as Bluetooth, UWB, Wi-Fi Aware, or the like via a communication module (e.g., communication module 340 of FIG. 3).

In operation 811, the processor 390 may receive device information of the electronic device (e.g., electronic device 101 of FIG. 1). The device information of the electronic device 101 may include at least one of a name (e.g., model name) of the electronic device 101, device feature information, a network identifier, network information, or communication channel information. The device information of the electronic device 101 may include information associated with the electronic device 101 in the same or similar manner as the device information of the external device 200.

In operation 813, the processor 390 may connect to the electronic device 101 based on the device information. The processor 390 may request a communication connection from the electronic device 101 via the communication module 340, and may connect to the electronic device 101 for communication when a response is received from the electronic device 101 in response to the request. The processor 120 may connect to the electronic device 101 for communication via the communication module 340. Upon connection for communication, the processor 120 may receive data (or file) (e.g., at least one of text, an image, a video, and a document) from the electronic device 101, or may transmit data or instructions to the electronic device 101.

According to an embodiment, when device information is received from an electronic device, the processor 390 may connect the electronic device based on the device information. Alternatively, when pieces of device information are received from a plurality of electronic devices, the processor 390 may select at least one of the plurality of electronic devices. For example, the processor 390 may measure a distance between the external device 200 and each of the plurality of electronic devices based on UWB communication, and may select the electronic device 101 that is located in a shortest distance among the measured distances. Alternatively, the processor 390 may obtain an image of the front side of the user via the camera module 370, and may select the electronic device 101 located in front of the user or within a field of view (FOV) based on the obtained front image and a distance between the external device 200 and each of the plurality of electronic devices. Alternatively, the processor 390 may provide a connectable display list, and may select at least one of the plurality of electronic devices based on a user input (e.g., touch, gesture, voice) in the provided device list. The processor 390 may provide the communication connectable device list in response to a request from the user while the electronic device 101 is connected, and may change a device connected for communication, based on a user input in the communication connectable device list.

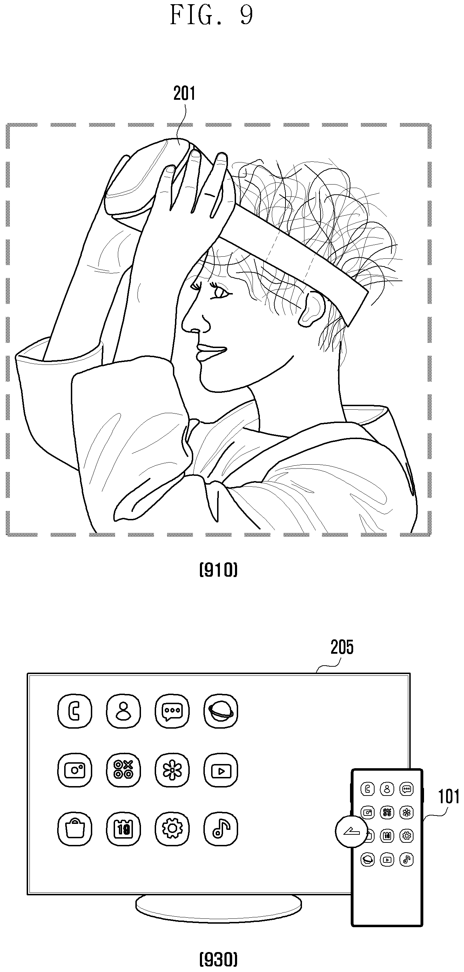

FIG. 9 is a diagram illustrating an example of a device connection request in an external device according to an embodiment of the disclosure.

Referring to FIG. 9, in a first reference numeral 910, an external device (e.g., external device 200 of FIG. 2) according to an embodiment may generate a bio-hash when a connection request from a user is detected. For example, the first reference numeral 910 is an example of detecting a connection request when the external device 200 is AR glasses. When it is determined that a user wears the external device 200 via a proximity sensor (e.g., proximity sensor 331 of FIG. 3) included in a sensor module 300 or via strap adjustment, the external device 200 may determine that connection is requested. A second reference numeral 930 is an example of detecting a connection request when the external device 200 is a TV. When a request for screen interoperation, data transfer, or the use of a clipboard is received from a user, or when it is determined that a user uses the external device 200, the external device 200 may determine that connection is requested.

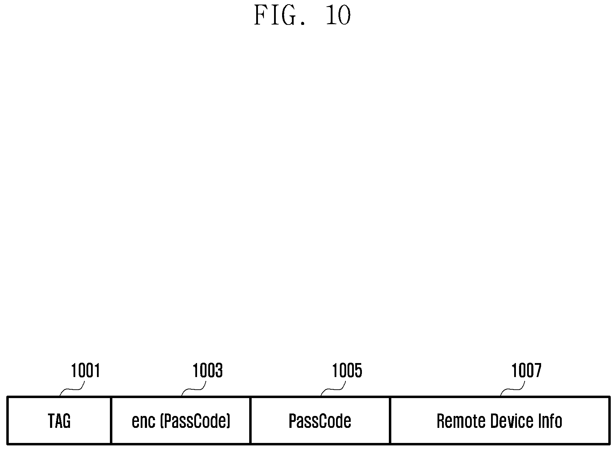

FIG. 10 is a diagram illustrating an example of a message received from an external device according to an embodiment.

Referring to FIG. 10, an external device (e.g., external device 200 of FIG. 2) according to an embodiment may generate a message 1000 including at least one of a tag 1001, an encoded pass code 1003, a pass code 1005, and device information 1007 of the external device 200. The tag 1001 may indicate that the message 1000 is request data for obtaining device information. The external device 200 may generate a pass code pair including the encoded pass code 1003 and the pass code 1005. The encoded pass code 1003 may include a pass code encoded with a bio-hash, as a value obtained by encoding the pass code 1005 by using the bio-hash. The pass code 1005 may be an unencoded pass code, as a one-time random value corresponding to a pass code. The device information 1007 of the external device 200 may include at least one of a name (e.g., model name) of the external device 200, device feature information, a network identifier, network information, or communication channel information.

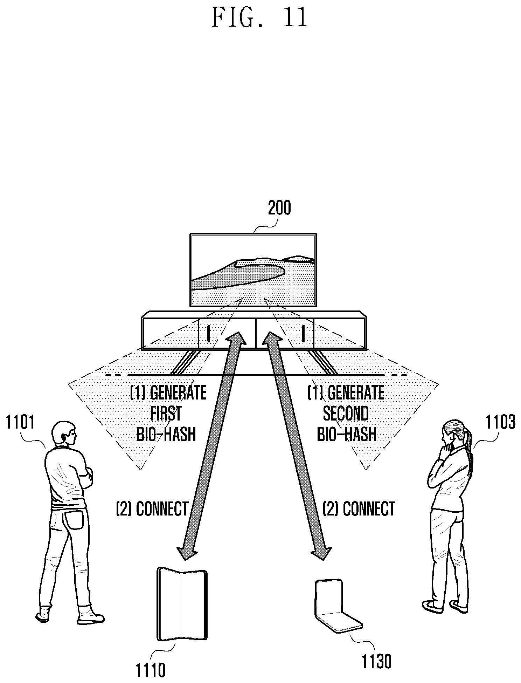

FIG. 11 is a diagram illustrating an example of connecting to different electronic devices, by an external device according to an embodiment.

Referring to FIG. 11, the external device (e.g., external device 200 of FIG. 2) according to an embodiment may establish a communication connection to a first electronic device 1110 by using a bio-hash of a first user 1101 or may establish a communication connection to a second electronic device 1130 by using a bio-hash of a second user 1103. Upon recognition of the first user 1101 via a camera (e.g., camera module 370 of FIG. 3), the external device 200 may determine that connection for communication is requested. The external device 200 may obtain biometric information (e.g., facial image) of the first user 1101 from the camera module 370, and may generate a first bio-hash based on the obtained biometric information. The external device 200 may broadcast a message including a pass code encoded with the first bio-hash, and may receive device information of the first electronic device 1110 from the first electronic device 1110 in response to the message. The external device 200 may establish a communication connection to the first electronic device 1110 based on the device information of the first electronic device 1110.

Alternatively, the external device 200 may obtain biometric information (e.g., facial image) of the second user 1103 from the camera module 370, and may generate a second bio-hash based on the obtained biometric information. The external device 200 may broadcast a message including a pass code encoded with the second bio-hash, and may receive device information of the second electronic device 1130 from the second electronic device 1130 in response to the message. The external device 200 may establish a communication connection to the second electronic device 1130 based on the device information of the second electronic device 1130.

According to an embodiment, the external device 200 may establish a communication connection to the second electronic device 1130 after terminating the communication connection to the first electronic device 1110. Alternatively, the external device 200 may establish a communication connection to the second electronic device 1130 in the state of having the communication connection to the first electronic device 1110.

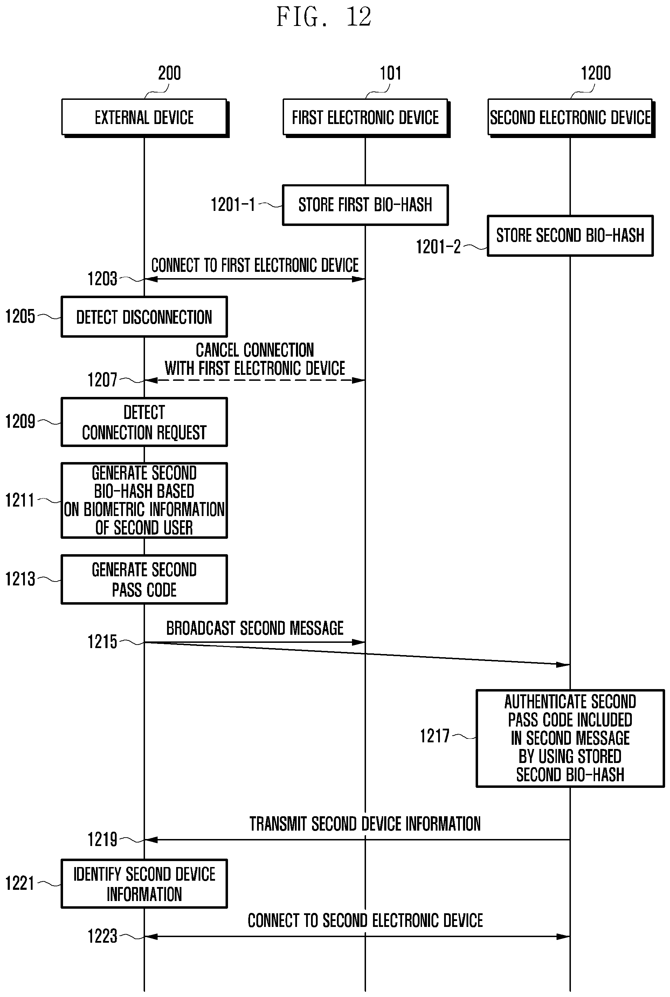

FIG. 12 is a flowchart illustrating a method of connecting to different electronic devices, by an external device according to an embodiment.

Referring to FIG. 12, in operation 1201-1, a first electronic device (e.g., electronic device 101 of FIG. 1) according to an embodiment may store a first bio-hash. The first bio-hash may be generated based on biometric information corresponding to a first user of the first electronic device 101. The first bio-hash may be stored in a secure area of a memory (e.g., memory 130 of FIG. 1) included in the first electronic device 101.

In operation 1201-2, a second electronic device 1200 (e.g., electronic device 101 of FIG. 1) according to an embodiment may store a second bio-hash. The second bio-hash may be generated based on biometric information corresponding to a second user of the second electronic device 1200. The second bio-hash may be stored in a secure area of a memory (e.g., memory 130 of FIG. 1) included in the second electronic device 1200.

Operation 1201-1 and operation 1201-2 may operate irrespective of an operation order, and it may describe that each electronic device stores a bio-hash corresponding to its user before connecting to the external device 200. In addition, the first bio-hash is associated with the first user and the second bio-hash is associated with the second user, and it may describe that different users, not the same user, store their bio-hashes in their electronic devices.

In operation 1203, an external device (e.g., external device 200 of FIG. 2) according to an embodiment may connect to the first electronic device 101. The connection refers to the pairing of the external device 200 with the electronic device 101 via short-distance wireless communication (e.g., Bluetooth, UWB, Wi-Fi).

In operation 1205, the external device 200 may detect disconnection. For example, in the case in which the external device 200 is AR glasses, when it is detected that a user takes off the external device 200, the external device 200 may determine that disconnection is requested. In the case in which the external device 200 is a notebook computer or a TV, when a user requests termination of screen interoperation or terminates an application for screen interoperation, the external device 200 may determine that disconnection is requested.

In operation 1207, the external device 200 may cancel the connection with the first electronic device 101. Upon detection of disconnection, the external device 200 may cancel (e.g., terminate, disconnect) the communication connection with the first electronic device 101.

In operation 1209, the external device 200 may detect a connection request. For example, in the case in which the external device 200 is AR glasses, when it is determined that the second user (e.g., a user of the second electronic device 1200) wears the external device 200, the external device 200 may determine that connection is requested. In the case in which the external device 200 is a notebook computer or a TV, when a user requests screen interoperation, data transfer, or the use of a clipboard, the external device 200 may determine that connection is requested.

In operation 1211, the external device 200 may generate a second bio-hash based on biometric information of the second user. When the external device 200 is AR glasses, the second user may be in the state of wearing the external device 200. The external device 200 may obtain an iris image of the second user from the camera module 370, may extract a feature point from the obtained iris image, and may generate a second bio-hash corresponding to the second user.

In operation 1213, the external device 200 may generate a second pass code. The second pass code may be a one-time random value generated for connection to the external device 200. The external device 200 may encode the generated second pass code with the generated second bio-hash. In addition, the external device 200 may generate a second message including at least one of a tag, a second pass code pair, or device information of the external device 200. The tag may indicate that the second message is request data for obtaining device information. The second pass code pair may include the second pass code that is not encoded and an encoded second pass code that is encoded with the second bio-hash. The device information of the external device 200 may include at least one of a name (e.g., model name) of the external device 200, device feature information, a network identifier, network information, or communication channel information.

In operation 1215, the external device 200 may broadcast the second message. The external device 201 may broadcast the second message using a communication technology such as Bluetooth, UWB, Wi-Fi Aware, or the like. The second message is transmitted to a plurality of unspecified devices located around the external device 200 and thus, when the first electronic device 101 is located around the external device 200, the first electronic device 101 may also receive the second message. **In** addition, the second message may also be transferred to the second electronic device 1200 that wears the external device 200.

In operation 1217, the second electronic device 1200 may authenticate, by using the stored second bio-hash, the second pass code included in the second message. The second pass code is generated for connection to the second electronic device 1200 of the second user and thus, may be authenticated by using the second bio-hash. The second electronic device 1200 may encode the second pass code included in the second message by using the second bio-hash stored in the memory 130, may determine whether the encoded second pass code is identical to the encoded second pass code included in the second message, and may authenticate the second pass code. Alternatively, the second electronic device 1200 may decode the encoded second pass code included in the second message by using the second bio-hash stored in the memory 130, may determine whether the decoded second pass code is identical to the unencoded second pass code included in the second message, and may authenticate the second pass code. According to an embodiment, the second electronic device 1200 may determine, based on the device information of the external device 200, a bio-hash to be used for authenticating a pass code.

In operation 1219, the second electronic device 1200 may transmit device information of the second electronic device 1200 to the external device 200. Upon authentication of the second pass code, the second electronic device 1200 may determine that the second user who wears (or uses) the external device 200 is identical to the second user of the second electronic device 1200, and may transmit the device information of the second electronic device 1200 to the external device 200. Based on the device information of the external device 200 included in the second message, the second electronic device 1200 may transmit the device information of the second electronic device 1200 to the external device 200. The device information of the external device 200 includes network information or communication channel information and thus, the second electronic device 1200 may transmit the device information of the second electronic device 1200 to the external device 200 by using the network information or communication channel information of the external device 200. The device information of the second electronic device 1200 may include at least one of a name (e.g., model name) of the electronic device 101, device feature information, a network identifier, network information, or communication channel information.

In operation 1221, the external device 200 may identify second device information. Here, the second device information refers to the device information of the second electronic device 1200. The external device 200 may receive the device information of the second electronic device 1200 from the second electronic device 1200.

In operation 1223, the external device 200 may connect to the second electronic device 1200 based on the second device information. The external device 200 may establish a communication connection to the second electronic device 1200 via any one of Bluetooth, UWB, and Wi-Fi by using the communication module 340. Upon establishment of the communication connection, the external device 200 may receive data from the second electronic device 1200 or may transmit data or instructions to the second electronic device 1200. The external device 200 may cancel the communication connection with the first electronic device 101, and may connect to the second electronic device 1200 for communication.

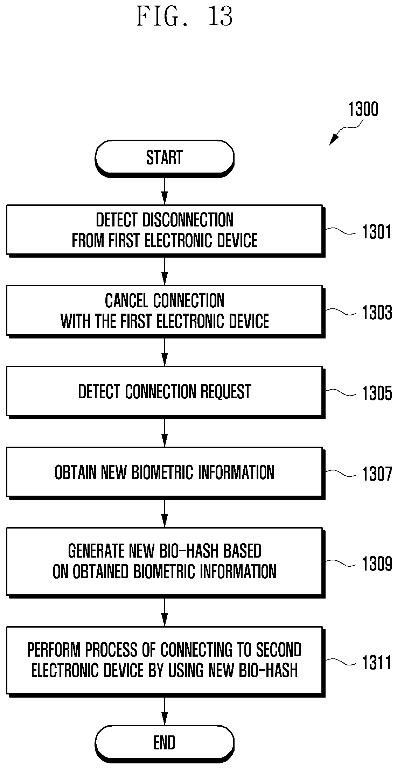

FIG. 13 is a flowchart 1300 illustrating a method of cancelling a connection with one electronic device and connecting to another electronic device, by an external device according to an embodiment.

Referring to FIG. 13, in operation 1301, a processor (e.g., processor 390 of FIG. 3) of an external device (e.g., external device 200 of FIG. 2) according to an embodiment may detect disconnection from a first electronic device (e.g., electronic device 101 of FIG. 1). For example, in the case in which the external device 200 is AR glasses, when it is detected that a user takes off the external device 200, the external device 200 may determine that disconnection is requested. In the case in which the external device 200 is a notebook computer or a TV, when a user requests cancellation of screen interoperation or terminates an application for screen interoperation, the external device 200 may determine that disconnection is requested.

In operation 1303, the processor 390 may cancel the connection with the first electronic device 101. Upon detection of disconnection, the external device 200 may cancel (e.g., terminate, disconnect) the communication connection with the first electronic device 101.

In operation 1305, the external device 390 may detect a connection request. For example, in the case in which the external device 200 is AR glasses, when it is determined that a second user (e.g., a user of the second electronic device 1200 of FIG. 12) wears the external device 200, the processor 390 may determine that connection is requested. In the case in which the external device 200 is a notebook computer or a TV, when a user requests screen interoperation, data transfer, or the use of a clipboard, the processor 390 may determine that connection is requested.

In operation 1307, the processor 390 may obtain new biometric information. For example, when the external device 200 is AR glasses, the second user may be in the state of wearing the external device 200. The processor 390 may capture an iris of the second user via a camera (e.g., the camera module 370 of FIG. 3) and may obtain an iris image of the second user as new biometric information.

In operation 1309, the processor 390 may generate a new bio-hash based on the obtained biometric information. The new bio-hash refers to a newly generated bio-hash that is different from a bio-hash (e.g., bio-hash generated based on biometric information of a first user) used for connecting to the first electronic device 101. The processor 390 may extract a feature point from the iris image of the second user, and may generate a second bio-hash corresponding to the second user.

In operation 1311, the processor 390 may perform a process of connecting to the second electronic device 1200 by using the new bio-hash. To distinguish from a first bio-hash generated based on the biometric information of the first user, the new bio-hash is referred to as "second bio-hash." The process of connecting to the second electronic device 1200 may include operations 805 to 813 of FIG. 8. The processor 390 may perform operations 805 to 813 of FIG. 8, after performing operation 1309.

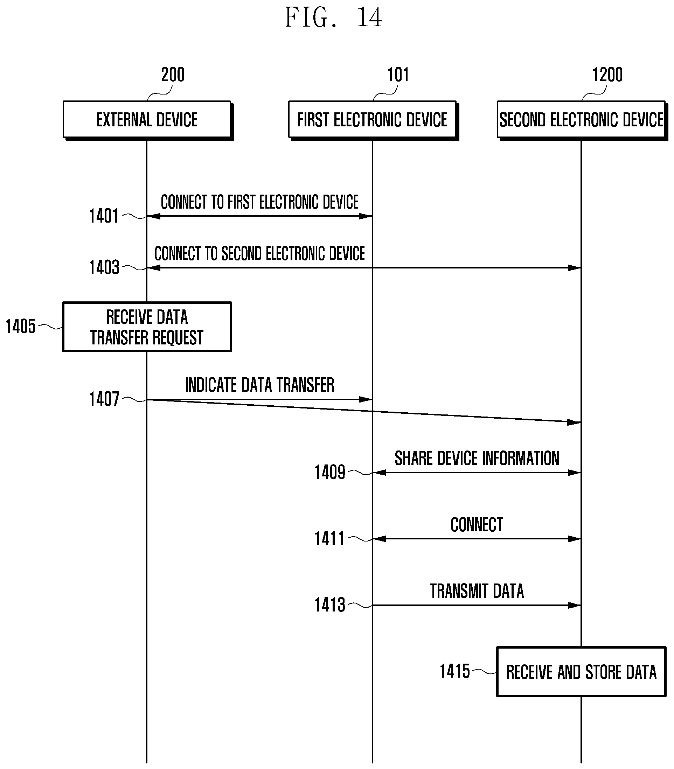

FIG. 14 is a flowchart illustrating a method of indicating data transfer from one electronic device to another electronic device, by an external device according to an embodiment.

Referring to FIG. 14, in operation 1401, an external device (e.g., external device 200 of FIG. 2) according to an embodiment may connect to a first electronic device (e.g., the electronic device 101 of FIG. 1). The connection refers to the pairing of the external device 200 with the first electronic device 101 via short-distance wireless communication (e.g., Bluetooth, UWB, Wi-Fi). For the connection, the external device 200 may perform all of the operations of FIG. 8 and may connect to the first electronic device 101 for communication.

In operation 1403, the external device 200 may connect to a second electronic device (e.g., second electronic device 1200 of FIG. 12). The connection refers to the pairing of the external device 200 with the second electronic device 1200 via short-distance wireless communication (e.g., Bluetooth, UWB, Wi-Fi). For the connection, the external device 200 may perform all of the operations of FIG. 8 and may connect to the second electronic device 1200 for communication. The external device 200 may not be connected to a single electronic device, but may be connected to a plurality of electronic devices (e.g., first electronic device 101 and second electronic device 1200).

Operations 1401 and 1403 operate irrespective of an operation order, and it may describe that the external device 200 may be connected to a plurality of electronic devices (e.g., first electronic device 101 and second electronic device 1200). According to an embodiment, the external device 200 may connect to the first electronic device 101 and may be requested, by a user, to provide a communication connectable device list. When the user selects the second electronic device 1200 from the communication connectable device list, the external device 200 may connect to the second electronic device 1200.

In operation 1405, the external device 200 may receive a data transfer request. The data transfer request may be for moving data stored in the first electronic device 101 to the second electronic device 1200.

In operation 1407, to the first electronic device 101 and the second electronic device 1200, the external device 200 may indicate data transfer. For example, the external device 200 may transmit device information of the second electronic device 1200 to the first electronic device 101 and may command the first electronic device 101 to transmit stored predetermined data to the second electronic device 1200. In addition, the external device 200 may transmit device information of the first electronic device 101 to the second electronic device 1200 and may command the second electronic device 1200 to receive predetermined data stored in the first electronic device 101.

In operation 1409, the first electronic device 101 and the second electronic device 1200 may share the device information. For example, the first electronic device 101 may request the device information of the second electronic device 1200 from the second electronic device 1200 according to an indication from the external device 200. Alternatively, the first electronic device 101 may receive the device information of the second electronic device 1200 from the external device 200. Alternatively, the second electronic device 1200 may request the device information of the first electronic device 101 from the first electronic device 101 according to an indication from the external device 200. Alternatively, the second electronic device 1200 may receive the device information of the first electronic device 101 from the external device 200.

In operation 1411, the first electronic device 101 and the second electronic device 1200 may connect to each other. The first electronic device 101 may request connection from the second electronic device 1200 based on the device information of the second electronic device 1200, and may connect to the second electronic device 1200 that responds to the request. Alternatively, the second electronic device 1200 may request connection from the first electronic device 101 based on the device information of the first electronic device 101, and may connect to the first electronic device 101 that responds to the request.

In operation 1413, the first electronic device 101 may transmit data to the second electronic device 1200. The first electronic device 101 may be connected to the second electronic device 1200 via Bluetooth, Wi-Fi, or UWB communication. The first electronic device 101 may transmit data that the external device 200 directs to transmit to the second electronic device 1200, to the second electronic device 1200 via a communication module (e.g., communication module 190 of FIG. 1).

In operation 1415, the second electronic device 1200 may receive and store the data from the first electronic device 101. The second electronic device 1200 may receive the data from the first electronic device 101 according to the command from the external device 200. The second electronic device 1200 may store the received data in a memory.

An operation method of the electronic device 101 according to an embodiment of the disclosure may include an operation of receiving, from the external device 200, a message including at least one of a pass code pair and device information of the external device via the at least one communication module 190, an operation of authenticating a pass code associated with the external device by using a bio-hash stored in the memory 130 and the pass code pair, an operation of transmitting, based on an authentication result, device information of the electronic device to the external device, and an operation of connecting, based on a request from the external device, to the external device via the at least one communication module.

The pass code pair may include a first pass code obtained by encoding the pass code with the bio-hash, and a second pass code corresponding to the pass code.

The operation of authenticating may include an operation of decoding a first pass code included in the pass code pair by using the bio-hash stored in the memory, and an operation of determining whether the decoded pass code is identical to a second pass code included in the pass code pair, and authenticating the pass code associated with the external device.

The operation of authenticating may include an operation of encoding a second pass code included in the pass code pair by using the bio-hash stored in the memory, and an operation of determining whether the encoded pass code is identical to a first pass code included in the pass code pair, and authenticating the pass code associated with the external device.

The method may further include an operation of determining, based on the device information of the external device, a bio-hash to be used for authenticating the pass code from among a plurality of bio-hashes.

The operation of determining may include an operation of identifying device feature information of the external device included in the device information of the external device, an operation of authenticating the pass code by using a first bio-hash associated with a first device feature from among the plurality of bio-hashes when the identified device feature information corresponds to the first device feature, and an operation of authenticating the pass code by using a second bio-hash associated with a second device feature from among the plurality of bio-hashes when the identified device feature information corresponds to the second device feature, and the first bio-hash and the second bio-hash may be stored in the memory, and may be different from each other.

The operation of transmitting may include, upon authentication of the pass code, an operation of determining that a user who uses the external device is identical to a user of the electronic device and transmitting the device information of the electronic device to the external device.

An operation method of the electronic device 200 according to an embodiment of the disclosure may include an operation of generating a bio-hash corresponding to biometric information of a user in response to a connection request, an operation of generating a pass code for connection to the electronic device, an operation of generating a message including a pass code that is encoded with the generated bio-hash, an operation of broadcasting the generated message, an operation of receiving device information of the external device 101 from the external device that responds to the broadcasted message, and an operation of pairing with the external device based on the device information of the external device.

The operation of generating the message may include an operation of encoding the generated pass code by using the generated bio-hash, and an operation of generating a message including at least one of the generated pass code, the encoded pass code, and device information of the electronic device.

The method may further include an operation of deleting the generated bio-hash and the generated pass code when paring with the external device is performed.

The method may further include, when paring with the external device is performed, an operation of storing device information of the external device in a communication connectable device list, an operation of providing the communication connectable device list in response to a request from a user during connection with the external device, and an operation of switching a device connected for communication based on a user input in the communication connectable device list.

The various embodiments of the disclosure provided in the specification and the accompanying drawings are merely predetermined examples for easily describing the technical contents of the disclosure and helping understanding of the disclosure, but the disclosure is not limited thereto. Therefore, it should be construed that the scope of the disclosure includes all modifications or modified forms obtained based on the technical idea of the disclosure, in addition to the embodiments disclosed herein.

## Claims

1. An electronic device (101) comprising:
at least one communication module (190);
a memory (130) configured to store biometric information of a user and a bio-hash corresponding to the biometric information; and
a processor (120) operatively connected to at least one of the at least one communication module or the memory,
wherein the processor is configured to:
receive, from an external device (200), a message including at least one of a pass code pair and device information of the external device via the at least one communication module;
authenticate a pass code associated with the external device by using the bio-hash stored in the memory and the pass code pair;
transmit, based on an authentication result, device information of the electronic device to the external device; and
connect, based on a request from the external device, to the external device via the at least one communication module.

2. The electronic device of claim 1, wherein the pass code pair comprises a first pass code obtained by encoding the pass code with the bio-hash, and a second pass code corresponding to the pass code.

3. The electronic device of claim 1, wherein the processor is configured to:
decode a first pass code included in the pass code pair by using the bio-hash stored in the memory; and
determine whether the decoded pass code is identical to a second pass code included in the pass code pair, and authenticate the pass code associated with the external device.

4. The electronic device of claim 1, wherein the processor is configured to:
encode a second pass code included in the pass code pair by using the bio-hash stored in the memory; and
determine whether the encoded pass code is identical to a first pass code included in the pass code pair, and authenticate the pass code associated with the external device.

5. The electronic device of claim 1, wherein the processor is configured to determine, based on the device information of the external device, a bio-hash to be used for authenticating the pass code from among a plurality of bio-hashes.

6. The electronic device of claim 5, wherein the processor is configured to:
identify device feature information of the external device included in the device information of the external device;
in case that the identified device feature information corresponds to a first device feature, authenticate the pass code by using a first bio-hash associated with the first device feature from among the plurality of bio-hashes; and
in case that the identified device feature information corresponds to a second device feature, authenticate the pass code by using a second bio-hash associated with the second device feature from among the plurality of bio-hashes, and
wherein the first bio-hash and the second bio-hash are stored in the memory and are different from each other.

7. The electronic device of claim 1, wherein the processor is configured to, upon authentication of the pass code, determine that a user who uses the external device is identical to a user of the electronic device, and to transmit the device information of the electronic device to the external device.

8. An operation method of an electronic device (101), the method comprising:
receiving, from an external device (200), a message including at least one of a pass code pair and device information of the external device via at least one communication module (190);
authenticating a pass code associated with the external device by using a bio-hash stored in the memory 130 and the pass code pair;
transmitting, based on an authentication result, device information of the electronic device to the external device; and
connecting, based on a request from the external device, to the external device via the at least one communication module.

9. The method of claim 8, wherein the pass code pair comprises a first pass code obtained by encoding the pass code with the bio-hash, and a second pass code corresponding to the pass code.

10. The method of claim 8, wherein the authenticating comprises:
decoding a first pass code included in the pass code pair by using the bio-hash stored in the memory; and
determining whether the decoded pass code is identical to a second pass code included in the pass code pair, and authenticating the pass code associated with the external device.

11. The method of claim 8, wherein the authenticating comprises:
encoding a second pass code included in the pass code pair by using the bio-hash stored in the memory; and
determining whether the encoded pass code is identical to a first pass code included in the pass code pair, and authenticating the pass code associated with the external device.

12. The method of claim 8, further comprising determining, based on the device information of the external device, a bio-hash to be used for authenticating the pass code from among a plurality of bio-hashes.

13. The method of claim 12, wherein the determining comprises:
identifying device feature information of the external device included in the device information of the external device;
in case that the identified device feature information corresponds to a first device feature, authenticating the pass code by using a first bio-hash associated with the first device feature from among the plurality of bio-hashes; and
in case that the identified device feature information corresponds to a second device feature, authenticating the pass code by using a second bio-hash associated with the second device feature from among the plurality of bio-hashes, and
wherein the first bio-hash and the second bio-hash are stored in the memory, and are different from each other.

14. The method of claim 8, wherein the transmitting comprises, upon authentication of the pass code, determining that a user who uses the external device is identical to a user of the electronic device, and transmitting the device information of the electronic device to the external device.

15. The method of claim 8, further comprising:
generating a bio-hash corresponding to biometric information of a user in response to a connection request;
generating a pass code for connection to the electronic device;
generating a message including a pass code that is encoded with the generated bio-hash;
broadcasting the generated message;
receiving device information of an external device (101) from the external device that responds to the broadcasted message; and
pairing with the external device based on the device information of the external device.
